# FASCICULE DE BREVET EUROPEEN

(11) **EP 1 293 486 B1**
(45) Date de publication et mention de la délivrance du brevet: **07.04.2010**
(21) Numéro de dépôt: 01122264.3
(22) Date de dépôt: 18.09.2001
(51) Int. Cl.: C02F 3/20, B01F 3/04

(54) **Dispositif d'oxygénation à branches multiples pour microstation d'épuration d'eau**
Schlauchförmige Belüftungsvorrichtung für Kleinkläranlagen
Multiple tube aeration device for small scale wastewater treatment plant

(43) Date de publication de la demande: 19.03.2003
(73) Titulaire: EPUR S.A., 4460 Grace-Hollogne (BE)
(72) Inventeur: Hartenstein, Marcel, 4122 Plainevaux (BE)
(74) Mandataire: Office Freylinger

(56) Documents cités:
- DE-U- 29 905 972
- DE-U- 29 914 781
- US-A- 3 956 432
- US-A- 4 599 174
- US-A- 5 202 027
- PATENT ABSTRACTS OF JAPAN vol. 016, no. 295 (C-0957), 30 juin 1992 (1992-06-30) & JP 04 078490 A (FUJI ELECTRIC CO LTD), 12 mars 1992 (1992-03-12)

## Description

La présente invention concerne un dispositif d'oxygénation ou d'aération simple et pratique pour réacteurs aérobies, en particulier dans les (micro)stations d'épuration d'eau, de même que son utilisation.

Les réacteurs aérobies à lit fixe sont largement utilisés pour toutes sortes d'applications microbiologiques, qu'il s'agisse de dégradations d'effluents industriels ou domestiques, ou même de synthèses de produits à (haute) valeur ajoutée à l'aide de souches spécifiques de micro-organismes sélectionnés ou même modifiés génétiquement.

L'épuration individuelle des eaux domestiques peut être réalisée grâce à des petites stations (microstations) d'épuration qui sont par exemple des stations mono-cuve à plusieurs compartiments. L'eau passe successivement par les compartiments intégrant chacun une fonction différente, par exemple le dégraissage des eaux, la dégradation microbiologique, la décantation, etc.

La dégradation microbiologique dans ces microstations d'épuration est généralement réalisée au moyen d'un compartiment ou réacteur aérobie à lit fixe, dans lequel les micro-organismes peuvent se fixer sur un support structuré. Pour obtenir une épuration conforme à la réglementation, une aération ou oxygénation de ce lit est indispensable.

Une façon de procéder à l'oxygénation de réacteurs aérobies est l'injection d'air via un dispositif de micro-bullage placé sous le support de micro-organismes, c'est-à-dire sous le lit fixe. Ces dispositifs d'aération par micro-bullage (aérateurs) comportent habituellement soit d'une rampe tubulaire micro-perforée, soit d'un disque micro-perforé, servant à produire des bulles d'air de faible diamètre. L'objectif est de garantir une importante surface d'échange air-eau et une bonne répartition des bulles à l'intérieur du lit.

Or la performance de ces aérateurs diminue inévitablement dû au vieillissement du dispositif, par le bouchage progressif des micro-perforations ou même par d'éventuelles détériorations accidentelles. Le remplacement des aérateurs défectueux ou leur entretien éventuel exige cependant la dépose du lit fixe, c'est-à-dire le démontage et le retrait du support de bactéries pour pouvoir accéder au dispositif d'aération et le remplacer par un nouveau ou le nettoyer le cas échéant.

Dans le cas de souches spécifiquement sélectionnées ou modifiées par génie génétique, cette dépose du lit fixe est d'autant plus dommageable, tant en terme d'arrêt de la production, qu'en terme de risque de destruction ou de contamination du lit existant.

Outre la mise hors service forcée, la main d'oeuvre importante et d'autres nuisances, par exemple olfactives pour le traitement des eaux usées, qui sont associés à une telle opération de remplacement et/ou de nettoyage, celle-ci exige la vidange du moins partielle du réacteur ou de la microstation d'épuration et une perte de performance du moins temporaire due à la dépose préalable du lit bactérien.

DE 299 14 781 U1 décrit une station d'épuration avec au moins un lit fixe aéré par un aérateur qui est connecté à une arrivée d'air et qui est placé sous le lit fixe, station dans laquelle l'aérateur peut être pivoté dans une position en dehors de la zone de couverture du lit fixe, puis enlevé. Cette position en dehors de la zone de recouvrement du lit fixe doit être prévue dès le départ.

II serait donc utile de pouvoir procéder au remplacement de l'aérateur défectueux par un dispositif à performances au moins équivalentes sans devoir procéder à la dépose et à la repose du lit bactérien.

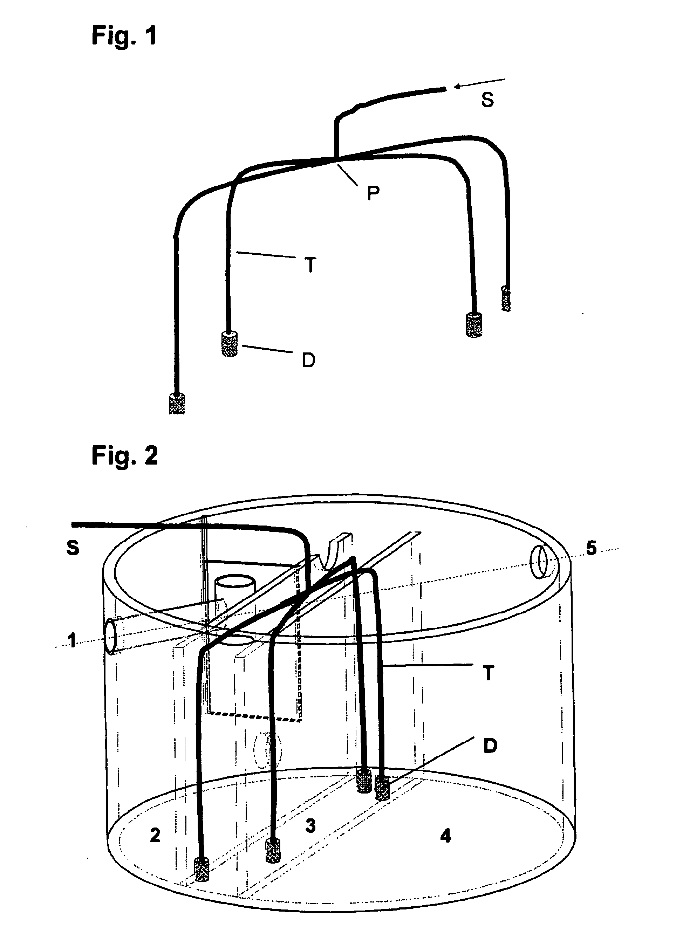

La présente invention propose par conséquent l'utilisation d'un dispositif d'oxygénation comme dispositif de substitution ou dispositif d'appoint au système d'oxygénation d'origine dans un réacteur aérobie à lit bactérien fixe structuré composé d'éléments tubulaires, le dispositif, comprenant
- une série de tubes d'air (T) reliés en un seul point distributeur (P), formant ainsi des ramifications, le distributeur (P) pouvant être raccordé à un surpresseur, et
- des têtes de micro-bullage (D) dont chacune est connectée à l'extrémité d'une des ramifications,
dans lequel les tubes d'air (T) sont flexibles et les dimensions des têtes de micro-bullage sont adaptées à l'introduction au travers du lit bactérien fixe structuré, du haut vers le bas, jusqu'à sa partie inférieure. (Fig. 1). Les différentes ramifications sont introduites de préférence à espaces réguliers et suffisamment profondément pour que les têtes de micro-bullage soient positionnées sous le lit fixe.

Le réacteur aérobie fait de préférence partie d'une station d'épuration d'eau, en particulier d'une microstation mono-cuve compartimentée pour l'épuration des eaux domestiques (Fig. 2 à 4).

Les avantages de l'utilisation d'un tel dispositif sont multiples et l'importance respective de ces atouts dépend fortement de l'application envisagée. Ainsi, les critères retenus pour une installation d'épuration individuelle n'auront pas la même priorité que pour la production industrielle d'une substance à haute valeur ajoutée.

L'avantage principal de l'utilisation du dispositif est l'inutilité d'une dépose préalable et de la repose subséquente du lit bactérien. Toute vidange, même partielle, est superflue. L'utilisation de ce dispositif permet donc de réduire significativement les coûts de remplacement des aérateurs et le temps mort de l'installation.

D'autre part, l'installation du dispositif est rapide et facile à réaliser, sans que l'installateur ou même l'utilisateur ne doive s'exposer à d'inutiles nuisances olfactives et autres. En cas de risque de contamination du lit bactérien (pour les applications utilisant des souches spécifiques), il suffira de suivre les consignes de stérilisation sinon habituelles, par exemple par désinfection du dispositif avant l'installation.

En outre la simplicité de mise en oeuvre permet également un contrôle plus simple et donc plus fréquent de l'état des aérateurs. Pour ce faire, il suffit de retirer, une à une, les têtes de micro-bullage du lit fixe, d'en vérifier individuellement l'état de fonctionnement et de les nettoyer ou de les remplacer le cas échéant, directement et sur place, sans devoir attendre une perte de performance suffisamment importante pour justifier la dépose du lit et les coûts que celle-ci engendre.

Tel que mentionné précédemment, ce système est d'une application relativement universelle, non seulement en ce qui concerne les lits fixes utilisés, mais également en ce qui concerne la finalité de l'utilisation du lit bactérien.

Le système est en outre très flexible dans le sens qu'il est possible d'adapter, à tout moment, même a posteriori, le nombre de tubes d'air et de têtes de micro-bullage aux caractéristiques dimensionnelles et à la capacité du réacteur aérobie. Le système peut non seulement être adapté aux conditions actuelles, mais également être modifié, c'est-à-dire par l'ajout ou le retrait d'une ou de plusieurs ramifications munies d'une tête de micro-bullage.

Un avantage supplémentaire et non-négligeable pour l'usager final, est le prix comparativement réduit de ce système, qui est le résultat de la simplicité de conception et de la flexibilité inhérente de ce dispositif d'aération.

Le dispositif est fabriqué en matériaux inaltérables afin de ne pas être détérioré ou détruit par les eaux agressives dans lesquelles il sera placé. Les tubes flexibles peuvent être des tubes en matière synthétique, de préférence en polyéthylène, en polypropylène, en PVC, ou en toute autre matière appropriée pour un tel usage. Les connexions, par exemple entre les différentes ramifications ou entre les tubes et les têtes de micro-bullage, peuvent également être constituées de matières synthétiques, telles que celles citées ci-dessus, ou bien en tout autre matériau inaltérable approprié, par exemple en acier inoxydable, en aluminium, etc.

La nature des têtes de micro-bullage n'est pas critique dans la mesure où leurs caractéristiques techniques sont appropriés pour l'utilisation considérée et que leurs dimensions sont adaptées à l'introduction au travers du lit fixe. Il s'agit d'une manière générale de diffuseurs de type connu, par exemple des diffuseurs en matériaux composites micro-poreux, à membrane (EPDM, silicone, etc., de préférence EPDM), en céramique ou à fente, sous forme de disques ou, préférentiellement, sous forme cylindrique ou tubulaire.

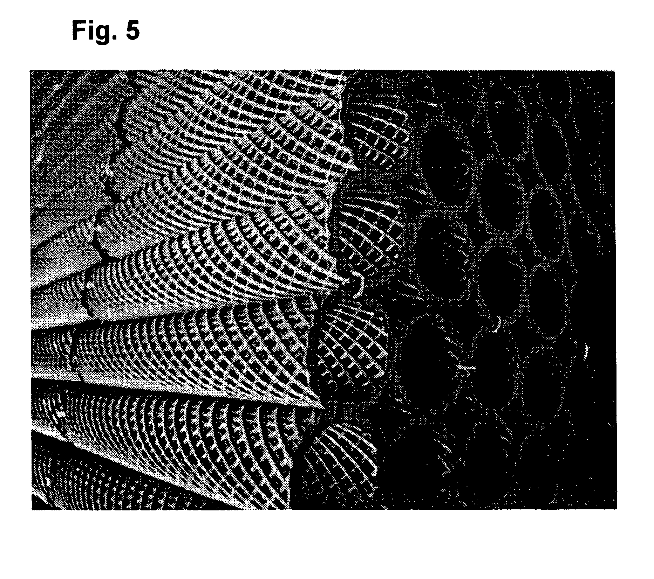

Le diamètre extérieur des têtes de micro-bullage (et évidemment des tubes flexibles auxquels elles sont connectées) devra, de préférence, être inférieur au diamètre intérieur libre des structures formant le lit fixe. Ces structures sont d'ordinaire constituées d'un grand nombre d'unités individuelles de forme grossièrement tubulaires rassemblées et fixées ensemble par paquets de dimensions appropriées (exemple de lit fixe, voir Fig. 5).

Dans les cas où ce diamètre intérieur libre serait trop réduit pour permettre l'introduction du dispositif selon l'invention, on peut également procéder au retrait d'une ou de plusieurs unités individuelles de façon à permettre le passage des aérateurs. Le retrait de quelques-unes de ces unités n'a que peu d'influence sur la capacité de dégradation de la station et cette perte relativement faible de surface utile sera largement compensée par une meilleure performance d'aération.

Néanmoins, l'atout majeur du dispositif est qu'il peut remplacer avantageusement tout système conventionnel d'aération existant. Un aspect de la présente invention est par conséquent l'utilisation comme dispositif de substitution au système d'oxygénation d'origine. L'ancien système est dans ce cas débranché du surpresseur existant et le nouveau dispositif y est simplement raccordé.

Un autre aspect de l'invention est l'utilisation du présent dispositif pour compléter un système d'aération existant, c'est-à-dire d'en améliorer les performances par l'ajout du dispositif en sus du système d'oxygénation d'origine. Ce système d'appoint peut alors fonctionner en permanence, par intermittence ou en fonction des besoins en oxygène des micro-organismes, par exemple pour des applications à charge variable. Si le surpresseur existant est suffisamment puissant, on peut y raccorder également le dispositif, par l'intermédiaire d'un moyen de branchement et, si nécessaire, de moyens de régulation afin de distribuer de façon appropriée le débit d'air entre les deux systèmes d'oxygénation. Dans le cas contraire, le surpresseur peut être remplacé par un modèle plus puissant ou bien un deuxième surpresseur servira à alimenter le nouveau dispositif.

La Figure 1 présente un dispositif avant son introduction dans le lit fixe. La flèche indique l'endroit de raccord au surpresseur.

La Figure 2 présente le dispositif de la Figure 1 monté dans le compartiment aérobie d'une microstation d'épuration d'eau (le lit fixe n'est pas représenté).

La Figure 3 est une vue en coupe montrant le dispositif à l'intérieur du lit fixe.

La Figure 4 est une vue en plan de la même installation (le lit fixe n'est pas représenté).

La Figure 5 est un exemple de lit fixe, tel qu'ils sont utilisés dans le domaine de l'épuration d'eau.

Le dispositif, tel qu'il est illustré à la Figure 1, comprend des tubes flexibles (T) raccordés en un seul point de distribution ou distributeur (P). L'autre extrémité de chaque tube flexible (T) est connectée à une tête de micro-bullage ou diffuseur (D), par exemple des diffuseurs en matériaux composites micro-poreux. Le distributeur (P) est ensuite raccordé à un surpresseur d'air (S) existant ou spécifiquement prévu.

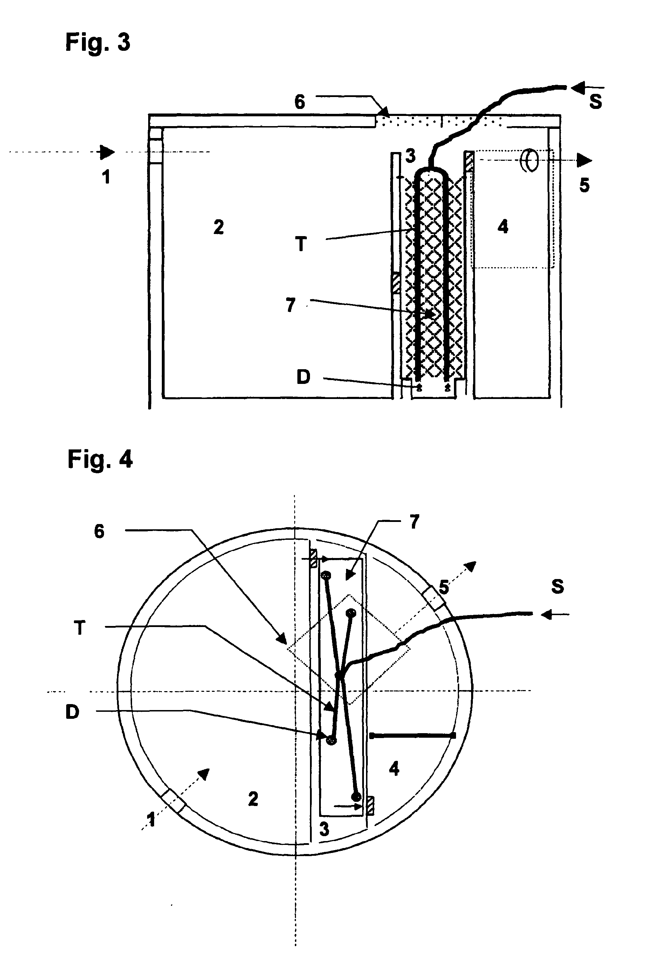

Les Figures 2 à 4 illustrent le cas d'une microstation d'épuration d'eau mono-cuve compartimentée à réacteur aérobie (3) équipée du dispositif de la Figure 1. L'eau à épurer arrive par l'entrée (1) dans le compartiment de dégraissage (2), puis dans le compartiment de dégradation microbiologique aérobie (3) à lit fixe structuré (7, Fig. 3). L'eau passe ensuite dans le compartiment de décantation (4) avant de quitter, épurée, la microstation par la sortie (5). La cuve est munie d'une trappe de visite (6, Fig. 3) pour pouvoir procéder à l'entretien de la station d'épuration.

Lors de l'installation du dispositif de la Fig. 1 dans la station d'épuration (Fig. 2 à 4), chacune des têtes de micro-bullage (D) est introduite profondément au travers du lit fixe (7, Fig. 3) jusqu'en dessous du niveau inférieur du lit monté dans le compartiment de dégradation microbiologique (3). Dans les Figures 2 et 4, le lit fixe n'est pas représenté pour des raisons de clarté des figures.

La répartition des diffuseurs (D) dans le lit fixe est de préférence régulière, de manière a obtenir une oxygénation la plus homogène possible dans le lit fixe (7). Leur nombre (quatre dans l'exemple illustré) dépend de la taille et de la capacité d'épuration souhaitée (ou charge) de la microstation et peut être varié à tout moment.

La Figure 5 est un exemple de lit fixe structuré utilisé pour l'épuration microbiologique de l'eau. Les têtes de micro-bullage du dispositif de la Fig. 1 peuvent être passées directement au travers de ces structures grossièrement tubulaires. Si le diamètre intérieur libre se révélait trop étroit, il est également possible de retirer le nombre nécessaire d'éléments individuels composant le lit fixe pour permettre le passage des diffuseurs.

## Revendications

1. Utilisation d'un dispositif d'oxygénation comme dispositif de substitution ou dispositif d'appoint au système d'oxygénation d'origine dans un réacteur aérobie à lit bactérien fixe structuré composé d'éléments tubulaires, ledit dispositif comprenant
- une série de tubes d'air (T) reliés en un seul point distributeur (P), formant ainsi des ramifications, le distributeur (P) pouvant être raccordé à un surpresseur, et
- des têtes de micro-bullage (D) dont chacune est connectée à l'extrémité d'une des ramifications,
**caractérisé en ce que** les tubes d'air (T) sont flexibles et les dimensions des têtes de micro-bullage sont adaptées à l'introduction au travers du lit bactérien fixe structuré, du haut vers le bas, jusqu'à sa partie inférieure.

2. Utilisation selon la revendication 1, **caractérisée en ce que** le nombre de tubes d'air et de têtes de micro-bullage est adapté aux caractéristiques dimensionnelles et à la capacité du réacteur aérobie.

3. Utilisation selon l'une quelconque des revendications précédentes, **caractérisée en ce que** les têtes de micro-bullage sont des diffuseurs en matériaux composites micro-poreux.

4. Station d'épuration d'eau comprenant un réacteur aérobie à lit bactérien fixe structuré composé d'éléments tubulaires pourvu d'un dispositif d'oxygénation comme dispositif de substitution ou dispositif d'appoint au système d'oxygénation d'origine, ledit dispositif comprenant
- une série de tubes d'air (T) reliés en un seul point distributeur (P), formant ainsi des ramifications, le distributeur (P) pouvant être raccordé à un surpresseur, et
- des têtes de micro-bullage (D) dont chacune est connectée à l'extrémité d'une des ramifications,
**caractérisée en ce que** les tubes d'air (T) sont flexibles et les dimensions des têtes de micro-bullage sont adaptées à l'introduction au travers du lit bactérien fixe structuré, du haut vers le bas, jusqu'à sa partie inférieure.

5. Station d'épuration selon la revendication 4, **caractérisée en ce que** le nombre de tubes d'air et de têtes de micro-bullage est adapté aux caractéristiques dimensionnelles et à la capacité du réacteur aérobie.

6. Station d'épuration selon l'une quelconque des revendications 4 ou 5, **caractérisée en ce que** les têtes de micro-bullage sont des diffuseurs en matériaux composites micro-poreux.

## Claims

1. The use of an oxygenation device as a replacement device or an auxiliary device for the original oxygenation system in a aerobic reactor with a structured fixed bacterial bed, consisting of tubular members, said device comprising
- a series of air tubes (T) connected in a single distribution point (P) thereby forming branches, the distributor (P) being able to be connected to a blower, and
- micro-bubbling heads (D), each of which is connected to the end of one of the branches,
**characterized in that** the air tubes (T) are flexible and the dimensions of the micro-bubbling heads are adapted for being introduced through the structured fixed bacterial bed, from top to bottom, as far as its lower portion

2. The use according to claim 1, **characterized in that** the number of air tubes and micro-bubbling heads is adapted to the dimensional characteristics and to the capacity of the aerobic reactor

3. The use according to any of the preceding claims, **characterized in that** the micro-bubbling heads are diffusers in microporous composite materials

4. A waste water treatment plant comprising an aerobic reactor with a structured fixed bacterial bed consisting of tubular members, provided with an oxygenation device as a replacement device or an auxiliary device for the original oxygenation system, said device comprising
- a series of air tubes (T) connected in a single distribution point (P) thereby forming branches, the distributor (P) being able to be connected to a blower, and
- micro-bubbling heads (D), each of which is connected to the end of one of the branches,
**characterized in that** the air tubes (T) are flexible and the dimensions of the micro-bubbling heads are adapted to the being introduced through the structured fixed bacterial bed from top to bottom, as far as its lower portion

5. The waste water treatment plant according to claim 4, **characterized in that** the number of air tubes and of micro-bubbling heads is adapted to the dimensional features and to the capacity of the aerobic reactor.

6. The waste water treatment plant according to any of claims 4 or 5, **characterized in that** the micro-bubbling heads are diffusers in microporous composite material

## Patentansprüche

1. Verwendung einer Sauerstoffzufuhrvorrichtung als Ersatzvorrichtung oder Hilfsvorrichtung im ursprünglichen Sauerstoffzufuhrsystem in einem aeroben Reaktor mit einem strukturierten Bakterien-Festbett, die aus schlauchartigen Elementen besteht, wobei die Vorrichtung Folgendes umfasst:
- eine Reihe Luftschläuche (T), die an einem einzigen Verteilerpunkt (P) befestigt sind und auf diese Art Verzweigungen bilden, wobei der Verteiler (P) mit einem Verdichter verbunden sein kann, und
- Köpfe zur Bildung von Mikroblasen (D), von denen jeder mit dem Ende einer der Verzweigungen verbunden ist,
**dadurch gekennzeichnet, dass** die Luftschläuche (T) flexibel sind und die Abmessungen der Köpfe zur Bildung von Mikroblasen zur Einführung durch das strukturierte Bakterien-Festbett von oben nach unten bis zu deren unterem Teil angepasst sind.

2. Verwendung nach Anspruch 1, **dadurch gekennzeichnet, dass** die Anzahl der Luftschläuche und der Köpfe zur Bildung von Mikroblasen auf die Abmessungsmerkmale und die Durchsetzleistung des aeroben Reaktors angepasst ist

3. Verwendung nach einem der vorhergehenden Ansprüche, **dadurch gekennzeichnet, dass** die Köpfe zur Bildung von Mikroblasen Diffusoren aus mikroporösen Verbundstoffen sind

4. Wasserkläranlage, die einen aeroben Reaktor mit einem strukturierten Bakterien-Festbett umfasst, die aus schlauchförmigen Elementen besteht, und die mit einer Sauerstoffzufuhrvorrichtung als Ersatzvorrichtung oder Hilfsvorrichtung im ursprünglichen Sauerstoffzufuhrsystem versehen ist, wobei die Vorrichtung Folgendes umfasst:
- eine Reihe Luftschläuche (T), die an einem einzigen Verteilerpunkt (P) befestigt sind und auf diese Art Verzweigungen bilden, wobei der Verteiler (P) mit einem Verdichter verbunden sein kann, und
- Köpfe zur Bildung von Mikroblasen (D), von denen jeder mit dem Ende einer der Verzweigungen verbunden ist,
**dadurch gekennzeichnet, dass** die Luftschläuche (T) flexibel sind und die Abmessungen der Köpfe zur Bildung von Mikroblasen zur Einführung durch das strukturierte Bakterien-Festbett von oben nach unten bis zu deren unterem Teil angepasst sind

5. Kläranlage nach Anspruch 4, **dadurch gekennzeichnet, dass** die Anzahl der Luftschläuche und der Köpfe zur Bildung von Mikroblasen auf die Abmessungsmerkmale und die Durchsetzleistung des aeroben Reaktors angepasst ist.

6. Kläranlage nach einem der Ansprüche 4 oder 5, **dadurch gekennzeichnet, dass** die Köpfe zur Bildung von Mikroblasen Diffusoren aus mikroporösen Verbundstoffen sind
